# EUROPÄISCHE PATENTSCHRIFT

(11) **EP 1 763 390 B1**
(45) Veröffentlichungstag und Bekanntmachung des Hinweises auf die Patenterteilung: **07.05.2008**
(21) Anmeldenummer: 05761229.3
(22) Anmeldetag: 06.07.2005
(51) Int. Cl.: B01D 33/04

(54) **FILTRATIONSVERFAHREN MIT FESTSTOFF-RESUSPENDIERUNG**
FILTERING PROCESS WITH RESUSPENSION OF SOLIDS
PROCEDE DE FILTRATION AVEC REMISE EN SUSPENSION DE SOLIDES

(30) Priorität: 09.07.2004 DE 102004033328
(43) Veröffentlichungstag der Anmeldung: 21.03.2007
(73) Patentinhaber: BHS-Sonthofen GmbH, 87527 Sonthofen (DE)
(72) Erfinder: SCHMID, Hans-Peter, 87545 Burgberg (DE)
(74) Vertreter: Herzog, Markus
(86) Internationale Anmeldenummer: PCT/EP2005/007313
(87) Internationale Veröffentlichungsnummer: WO 2006/005499

(56) Entgegenhaltungen:
- WO-A-02/30543
- DE-A1- 2 606 619
- DE-A1- 4 017 005
- US-A- 4 123 360
- US-A- 5 290 454

## Beschreibung

Die vorliegende Erfindung betrifft ein Verfahren gemäß dem Oberbegriff des Anspruchs 1.

Ein derartiges Verfahren ist aus der DE-A-26 06 619 bekannt.

Nachteilig an dem bekannten Verfahren ist, dass nach dem Filtern der Feststoffe und Suspensionsflüssigkeit enthaltenden Suspension immer noch Suspensionsflüssigkeit an der Oberfläche von Feststoffen anhaftet oder in Poren eines von abgelagerten Feststoffen gebildeten Filterkuchens eingeschlossen ist. Häufig weist die Suspensionsflüssigkeit für eine Weiterverarbeitung der aus ihr ausgefilterten Feststoffe ungünstige chemische oder/und physikalische Eigenschaften auf, ist insbesondere toxisch, sodass eine möglichst vollständige Trennung der Suspensionsflüssigkeit von den in ihr enthaltenen Feststoffen gewünscht ist.

Hierzu wird gemäß dem Stand der Technik eine Waschflüssigkeit auf den auf dem Filtermittel gebildeten Filterkuchen aufgegeben, welches aufgrund des vorherrschenden Druckgefälles den auf der Hochdruckseite befindlichen Filterkuchen zum Filtermittel hin durchläuft und schließlich nach Durchtritt durch das Filtermittel auf der Niederdruckseite abgeführt wird.

Durch diese Waschung kann ein Teil der Oberflächen der Feststoffteilchen des Filterkuchens von der Suspensionsflüssigkeit befreit werden, jedoch bilden die im Filterkuchen häufig eng aneinander anliegenden Feststoffe Poren oder Kapillarspalte, in denen die Suspensionsflüssigkeit besonders nachhaltig anhaftet. Die Suspensionsflüssigkeit wird daher an diesen Stellen von der Waschflüssigkeit nicht erreicht oder zumindest nicht vollständig ausgespült, sodass bisher ein gewisser Restgehalt an Suspensionsflüssigkeit nach dem Filtern als unvermeidlich akzeptiert werden musste.

Weiterer für die vorliegende Erfindung relevanter Stand der Technik ist ferner aus der DE-A- 40 17 005 und der US-A-4,123,360 bekannt.

Ausgehend vom genannten Nachteil des Standes der Technik ist es daher Aufgabe der vorliegenden Erfindung, eine technische Lehre anzugeben, dergemäß Feststoffe aus einer die Feststoffe und eine Suspensionsflüssigkeit enthaltenen Suspension möglichst ohne Suspensionsflüssigkeitsrückstände erhalten werden können. Zumindest sollte die Reinheit der Feststoffe bezüglich der ihr möglicherweise noch anhaftenden Suspensionsflüssigkeit, verglichen mit dem Stand der Technik, erhöht sein.

Diese Aufgabe wird gelöst durch ein gattungsgemäßes Verfahren gemäß Anspruch 1.

Im Gegensatz zu der aus dem Stand der Technik bekannten Waschung werden gemäß der Lehre der vorliegenden Erfindung die auf dem Filtermittel abgelagerten Feststoffe in einer Waschflüssigkeit resuspendiert, d.h. zumindest kurzfristig vom Filtermittel abgehoben und in der Waschflüssigkeit aufgenommen. Dadurch können beim Ablagern der Feststoffe gebildete Poren und Kapillarspalte zwischen Feststoffteilchen aufgebrochen und so auch die dort festgehaltene Suspensionsflüssigkeit von den Feststoffen entfernt werden.

Durch das erneute Suspendieren (Resuspendieren) der Feststoffe in der Waschflüssigkeit werden diese relativ zueinander bewegt und mit hoher Wahrscheinlichkeit zumindest kurzfristig allseitig von Waschflüssigkeit umspült. Im Anschluss an diesen Resuspendierungsvorgang wird die Waschflüssigkeit in einer bezüglich der ersten Arbeitszone stromabwärtigen zweiten Arbeitszone der Filtervorrichtung ausfiltriert.

Es wird ausdrücklich darauf hingewiesen, dass die erste Arbeitszone nicht notwendigerweise die absolut erste Arbeitszone der Filtervorrichtung sein muss. Es können dieser ersten Arbeitszone in Bezug auf das erfindungsgemäße Verfahren weitere Verfahrensschritte vorgeschaltet sein, etwa eine Erwärmung oder eine Abkühlung der zu filternden Suspension.

Ebenso ist es nicht erforderlich, dass die oben genannte zweite Arbeitszone unmittelbar auf die erste Arbeitszone folgt. Vielmehr können auch zwischen der ersten und der zweiten Arbeitszone weitere Arbeitszonen zur Verrichtung verschiedener Verfahrensschritte zwischengeschaltet sein. Entscheidend ist lediglich, dass die zweite Arbeitszone in Arbeitsrichtung der Filtervorrichtung betrachtet auf die erste Arbeitszone folgt.

Zur Unterscheidung wird die ursprünglich zu filternde Suspension als Suspension und die durch Resuspendieren erzeugte neue Suspension als Resuspension bezeichnet.

Eine Kontaktzeit, über welche die Feststoffe in der Waschflüssigkeit suspendiert sind, kann dann frei gewählt werden, wenn eine außerhalb der Filtervorrichtung angeordnete Waschvorrichtung vorgesehen ist, in welcher die Feststoffe resuspendiert werden.

Mit einer derartigen externen Waschvorrichtung können darüber hinaus in vorteilhafter Weise bestehende Filtervorrichtungen zur Ausführung des erfindungsgemäßen Verfahrens umgerüstet werden, da für die Resuspendierung keine Änderung der bestehenden Arbeitszoneneinteilung zu erfolgen braucht.

Schließlich kann bei Verwendung einer oben beschriebenen externen Waschvorrichtung eine Mischkammer zur Resuspendierung verwendet werden, welche in ihrer Größe und damit in ihrer Leistungsfähigkeit den Anforderungen entsprechend ohne Einschränkungen frei bemessen sein kann.

Zur Unterstützung der Resuspendierung von Feststoffen in der Waschflüssigkeit ist es gemäß einer Weiterbildung der vorliegenden Erfindung vorteilhaft, wenn die Waschflüssigkeit in einen turbulenten Strömungszustand versetzt wird. Dies kann konstruktiv dadurch geschehen, dass die Waschvorrichtung eine Förderstrecke mit wenigstens einem statischen Mischelement oder/und mit wenigstens einem dynamischen Mischelement oder/und mit wenigstens einer Pumpe oder/und mit wenigstens einem Mischvolumen umfasst.

Statische Mischelemente können beispielsweise durch in Strömungsrichtung aufeinanderfolgende orthogonal zur Strömungsrichtung zueinander versetzte Strömungshindernisse sein, welche von der Resuspension aus Feststoffen und Waschflüssigkeit umströmt werden müssen. Ebenso soll ein gewundener, insbesondere ein mäanderförmiger Verlauf der Förderstrecke im Sinne der vorliegenden Anmeldung als statisches Mischelement angesehen werden.

Als dynamisches Mischelement kann beispielsweise ein Rührer oder/und eine Mischwalze eingesetzt werden. Bei Feststoffen mit geringer Teilchengröße kann die Durchmischung mit der Waschflüssigkeit durch die genannte Pumpe erfolgen oder zumindest unterstützt werden.

Auch das Vorsehen wenigstens eines Mischvolumens fördert die Durchmischung von Waschflüssigkeit und Feststoffen und somit die Resuspendierung der letzteren. Ein Mischvolumen kann beispielsweise durch eine Querschnittsvergrößerung der Förderstrecke oder durch in der Förderstrecke liegende Behälter mit einem größeren auf eine Strömungslänge bezogenen Volumen als die Förderstrecke bereitgestellt werden.

Alternativ oder zusätzlich können die Feststoffe auch in der Filtervorrichtung selbst resuspendiert werden. Dies ist vor allem dann vorteilhaft, wenn für die Bereitstellung einer externen Waschvorrichtung nicht genügend Bauraum zur Verfügung steht. Hierzu können die Feststoffe kurz vom Filtermittel, auf welchem sie sich abgelagert haben, abgehoben werden. In einem einfachen Fall kann dies durch Aufspülen mittels eines Waschflüssigkeitsstrahls geschehen. Bei der Resuspendierung der Feststoffe in der Filtervorrichtung werden jedoch die Feststoffe in der Resuspension stets im Wesentlichen durch das Filtermittel in Arbeitsrichtung weitertransportiert.

Zusätzlich oder alternativ zur Resuspendierung der Feststoffe durch eine hohe Strömungsgeschwindigkeit der zugeführten Waschflüssigkeit, vorteilhafterweise derart, dass die Waschflüssigkeit eine entgegen der Arbeitsrichtung weisende Strömungskomponente aufweist, können die Feststoffe durch ein Rührwerk resuspendiert werden. Ein solches Rührwerk sorgt für eine gute Durchmischung der Feststoffe mit der Waschflüssigkeit. Durch diese Durchmischung werden die Feststoffe relativ zueinander und relativ zur Waschflüssigkeit bewegt, sodass die einzelnen Feststoffteilchen ausreichend mit Waschflüssigkeit umspült werden.

Da die Resuspendierung bei manchen Ausführungsformen der vorliegenden Erfindung nur über eine kurze Förderstrecke erfolgen kann, ist die Verwendung eines flachen Rührwerks vorteilhaft, da selbst bei geringer Tiefe des Resuspensionsstroms über dem Filtermedium ein flaches Rührwerk vollständig in die Resuspension eingetaucht sein kann, sodass ein hoher Verrührungs- und damit Turbulenzgrad unter Vermeidung von Wirkungsgradverlusten am Rührwerk erzielt werden kann.

Die Ablösung der Feststoffe vom Filtermittel wird erfindungsgemäß durch geeignetes Einspritzen der Waschflüssigkeit in den Filterkuchen selbst erreicht, etwa wie oben gesagt durch Einspritzen der Waschflüssigkeit mit hoher Strömungsgeschwindigkeit mit einer entgegen der Arbeitsrichtung gerichteten Strömungskomponente.

Weiterhin kann das Ablösen der Feststoffe vom Filtermittel durch Gegenspülen mit einer Flüssigkeit oder/und durch Gegenblasen mit einem Gas von der Niederdruckseite her erfolgen oder zumindest unterstützt werden.

Besonders vorteilhaft erscheint dabei die Verwendung einer mit Gas versetzten Gegenspülflüssigkeit, da dadurch die zum Gegenspülen erforderliche Flüssigkeitsmenge bei gleichem Ablöseeffekt deutlich reduziert werden kann.

Ausführungsformen von Filtervorrichtungen, Welche zur Ausfürhung des erfindungsgemäßen Verfahrens dienen, sehen Kammern vor, welche mit dem Filtermittel mitbewegt werden und in die die jeweils zu filternde Suspension eingefüllt werden. Dabei kann jeder Kammer auf der Niederdruckseite wenigstens ein Ablaufrohr zum Abführen der Suspensionsflüssigkeit zugeordnet sein. Dieses Ablaufrohr ist mit der Kammer mitbewegt.

Bei den gerade geschilderten Ausführungsformen kann zur Verringerung der notwendigen Bauteileanzahl das Ablaufrohr für das zuvor genannte Gegenspülen von der Niederdruckseite her zum Ablösen der Feststoffe vom Filtermittel verwendet werden. Hierzu wird eine Flüssigkeit in das Ablaufrohr derart eingeleitet, dass es zum Filtermittel hin strömt. Dabei kann ein unerwünschter Rückschlag von zuvor abgeströmter Suspensionsflüssigkeit zu den gerade abgefilterten Feststoffen dadurch vermieden werden, dass die auf dem Filtermittel abgelagerten Feststoffe nach dem Abfiltrieren mit gasförmigem Behandlungsfluid von der Hochdruck- zur Niederdruckseite durchgeblasen werden, beispielsweise bis zumindest ein Teil der Suspensionsflüssigkeit, vorzugsweise die gesamte Suspensionsflüssigkeit, aus wenigstens einem von der ersten Arbeitszone her noch mit Suspensionsflüssigkeit gefüllten Ablaufrohr verdrängt worden ist.

Dieses Durchblasen der abgelagerten Feststoffe kann auch getaktet erfolgen. Hierzu wartet man vorteilhafterweise, bis eine Kammer der Filtervorrichtung sich vollständig im Wirkungsbereich einer der zweiten Arbeitszone vorausgehenden, vorzugsweise einer sich an die erste Arbeitszone anschließenden Dichtungseinheit befindet, welche die zweite Arbeitszone von einer vorhergehenden, insbesondere von der ersten Arbeitszone, trennt. Dann wird die Kammer mit Gas durchgeblasen, so lange sie sich vollständig im Wirkungsbereich der Dichtungseinheit befindet. Die Dichtungseinheit dichtet die Kammer von der Hochdruckseite her ab, sodass das niederdruckseitige Abflussrohr die einzige Verbindung der Kammer mit der Außenumgebung ist, solange sich die Kammer vollständig im Wirkungsbereich der Dichtungseinheit befindet.

Häufig werden Schwerkrafteffekte bei Filtervorgängen genutzt. Hierzu wird das zu filternde Gut, im vorliegenden Fall die Suspension, gezielt mit einer vorbestimmten Orientierung zur Schwerkraftwirkungsrichtung durch das Filtermittel gefördert.

Derartige Effekte kann man sich zur weiteren Entfeuchtung der Feststoffe in der ersten Arbeitszone in vorteilhafter Weise zu Nutze machen, indem man dann, wenn das in Arbeitsrichtung stromabwärtige Ende der ersten Arbeitszone in einem entgegen der Schwerkraft ansteigenden Abschnitt der Filtervorrichtung angeordnet ist, den auf dem Filtermittel abgelagerten Feststoffen in dem stromabwärtigen Endbereich der ersten Arbeitszone ein gasförmiges Behandlungsfluid zugeführt wird.

Eine besonders gründliche Reinigung der Feststoffe von der Suspensionsflüssigkeit kann dadurch erhalten werden, dass die Feststoffe wenigstens ein weiteres Mal einer Resuspendier-Waschung unterzogen werden, d.h. vom Filtermittel entfernt, in einer Waschflüssigkeit resuspendiert und schließlich dem Filtermittel wieder zugeführt und abfiltriert werden, oder/und wenigstens einmal einer herkömmlichen Durchströmungs-Waschung unterzogen werden, d.h. mittels Waschflüssigkeit gewaschen werden, welche von der Hochdruckseite des Filtermittels zu dessen Niederdruckseite strömt.

Dabei können mehrere Resuspendier-Waschungen aufeinanderfolgend durchgeführt werden. Alternativ oder zusätzlich kann auch wenigstens ein Arbeitsgang mit einer aus dem Stand der Technik bekannten Durchströmungs-Waschung zwischen Resuspendier-Waschungen oder/und vor diesen oder/und nach diesen durchgeführt werden. Die Abfolge von Resuspendier- und Durchströmungs-Waschungen ist beliebig und wird vom Fachmann auf Grundlage des gewünschten Reinigungsergebnisses, von Kostenvorgaben sowie des verfügbaren Bauraums ausgewählt werden.

Dann, wenn wenigstens zwei Waschvorgänge aufeinanderfolgend stattfinden, können gemäß einer vorteilhaften Weiterbildung der vorliegenden Erfindung diese in Form einer Gegenstrom-Waschung ausgeführt werden. Dadurch kann Waschflüssigkeit in erheblichem Umfang eingespart werden, ohne das Reinigungsergebnis nennenswert zu verschlechtern. Dies betrifft sowohl Resuspendier- als auch Durchströmungs-Waschungen.

Bei der Gegenstrom-Waschung wird den Feststoffen am Ort der zweiten Waschung, d.h. in Arbeitsrichtung der Filtervorrichtung weiter stromabwärts, frischere Waschflüssigkeit zugegeben und abfiltriert. Die abfiltrierte, weniger frische Waschflüssigkeit wird zu dem in Arbeitsrichtung der Filtervorrichtung weiter stromaufwärts gelegenen Ort der ersten Waschung gefördert und dort in einem "Vorwaschgang" den Feststoffen zugeführt und von diesen wiederum abfiltriert. Dieser Stufenwaschungsprozess kann selbstverständlich auch mit mehr als zwei Waschvorgängen ausgeführt werden. Mit dieser Gegenstrom-Waschung kann eine sehr lange Waschstrecke bei geringem Einsatz an Waschflüssigkeit an der Filtervorrichtung erhalten und damit die Waschflüssigkeit sehr effektiv zur Reinigung ausgenutzt werden.

Um ein möglichst gutes Reinigungsergebnis erzielen zu können, sollte gemäß einer vorteilhaften Weiterbildung der vorliegenden Erfindung bei wenigstens einem Resuspensionsvorgang frische Waschflüssigkeit verwendet werden, d.h. eine Waschflüssigkeit, welche erstmals mit Feststoffen in Kontakt kommt.

Ebenso kann, wie oben geschildert, gemäß einer vorteilhaften Weiterbildung der vorliegenden Erfindung bei wenigstens einem Resuspensionsvorgang eine Waschflüssigkeit verwendet werden, die in Arbeitsrichtung stromabwärts bereits wenigstens einmal zum Waschen von Feststoffen verwendet wurde. Mit "Waschen" ist dabei sowohl eine Durchström-Waschung als auch eine erfindungsgemäße Resuspensions-Waschung bezeichnet. Durch diese Mehrfachverwendung der Waschflüssigkeit kann ein sehr gutes Reinigungsergebnis mit einer vergleichsweise geringen Menge an Waschflüssigkeit erzielt werden.

Gemäß einer weiteren vorteilhaften Ausführungsform der vorliegenden Erfindung kann die Filtervorrichtung eine Arbeitszone aufweisen, welche zur Trocknung der abgelagerten Feststoffe ausgebildet ist. Die Trocknung kann durch Durchleiten eines gasförmigen Trocknungsmediums durch die abgelagerten Feststoffe hindurch erfolgen. Als besonders vorteilhaft hat sich dabei ein heißes Trocknungsmedium erwiesen. Besonders bevorzugt wird Dampf, insbesondere Wasserdampf verwendet, da dieser sowohl die nötige Wärme enthält, um die abgelagerten Feststoffe in kurzer Zeit zu trocknen, als auch ausreichend feucht ist, um während der Trocknung noch eine zusätzliche Reinigungswirkung zu erzielen.

Schließlich kann die Filtervorrichtung eine Arbeitszone aufweisen, in welcher die auf dem Filtermittel abgelagerten Feststoffe gereinigt und gewünschtenfalls getrocknet von der Filtervorrichtung entnommen und weiteren Verarbeitungsschritten zugeführt werden.

Als Filtervorrichtung kommt ein Trommelfilter in Frage.

Die Filtervorrichtung kann darüber hinaus zur Erzeugung eines Druckgradienten von der Hochdruckseite zur Niederdruckseite als sogenannte Vakuumfiltervorrichtung oder auch als sogenannte Druckfiltervorrichtung ausgebildet sein. Bei einer Vakuumfiltervorrichtung herrscht auf der Hochdruckseite des Filtermittels üblicherweise Atmosphärendruck, während auf der Niederdruckseite ein Unterdruck erzeugt wird. Umgekehrt herrscht bei einer Druckfiltervorrichtung auf der Hochdruckseite ein den Atmosphärendruck übersteigender Druck, während auf der Niederdruckseite üblicherweise Atmosphärendruck herrscht. Es ist jedoch jede Art von Druckgefälle zwischen Hoch- und Niederdruckseite ausreichend. So kann sowohl auf der Hochdruck- als auch auf der Niederdruckseite ein über oder theoretisch sogar ein unter dem Atmosphärendruck liegendes Druckniveau herrschen, solange nur ein Druckgefälle von der Hochdruck- zur Niederdruckseite besteht.

Steht nur eine besonders kurze Filterstrecke zur Verfügung, so kann auch daran gedacht sein, auf der Hochdruckseite mit einem Überdruck bezüglich des Atmosphärendrucks und auf der Niederdruckseite mit einem Unterdruck bezüglich des Atmosphärendrucks zu arbeiten. Hierdurch wird ein besonders hoher Druckgradient zwischen den beiden Druckseiten des Filtermittels erreicht.

Vakuumfiltervorrichtungen sind beispielsweise als Vakuumtrommelfilter bekannt. Ebenso sind Druckdrehfilter bekannt, welche auch als Drucktrommelfilter bezeichnet werden. Sie alle können zur Durchführung des erfindungsgemäßen Verfahrens eingesetzt werden.

Die vorliegende Erfindung wird im Folgenden anhand der beiliegenden Zeichnungen näher erläutert. Es stellt dar:

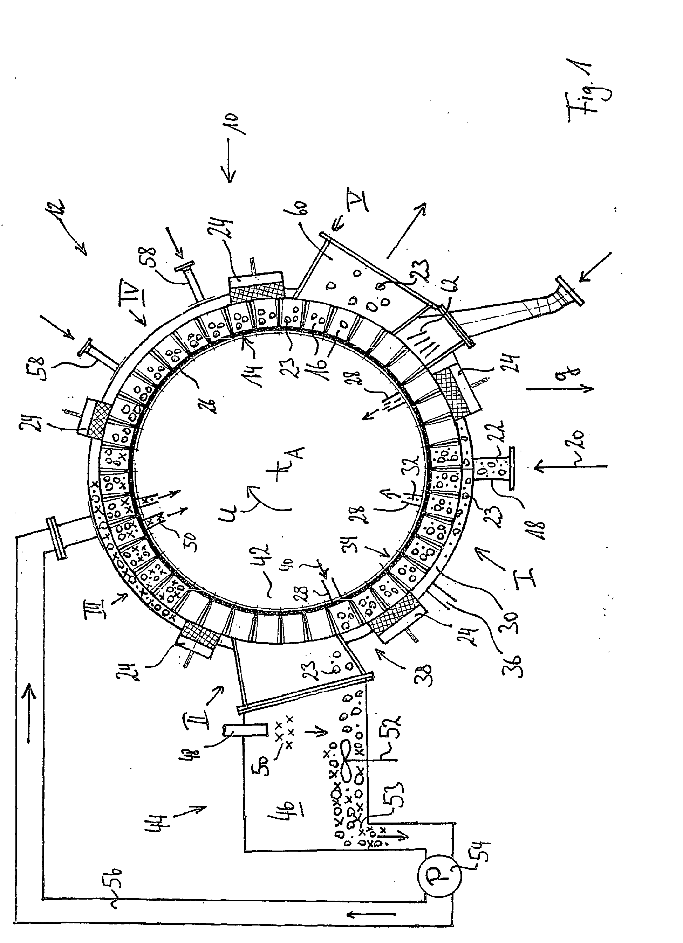

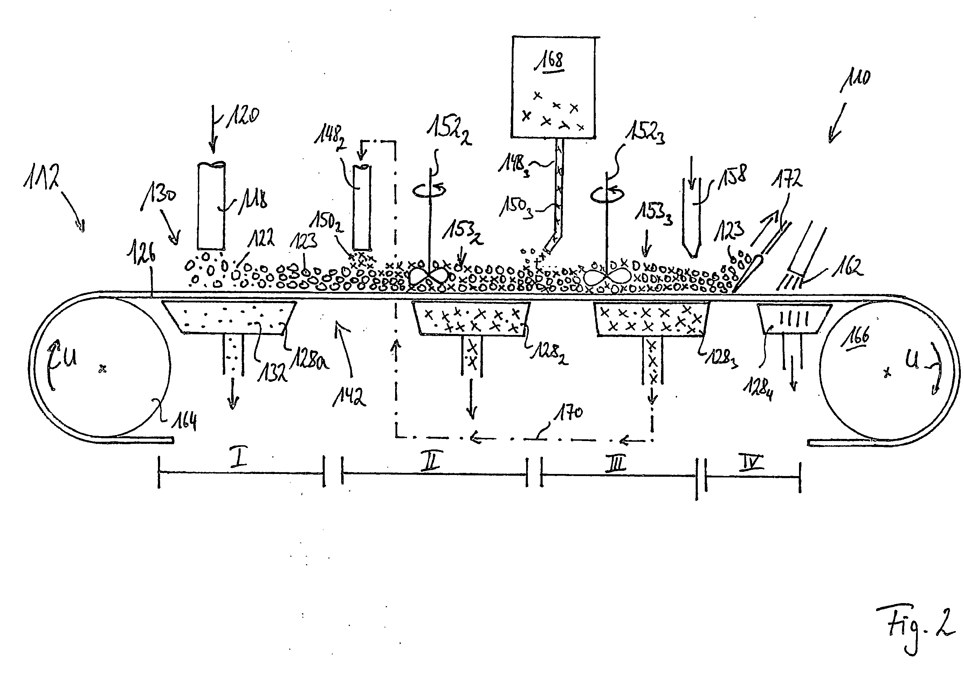

- Fig. 1: eine schematische Querschnittsansicht einer erfindungsgemäßen Trommeidruckfiltervorrichtung, welche nach dem erfindungsgemäßen Verfahren arbeitet.

In Fig. 1 ist eine erfindungsgemäße Filtervorrichtung allgemein mit 10 bezeichnet. Die Filtervorrichtung 10 umfasst ein Drucktrommelfilter 12, dessen Filtertrommel 14 um eine Drehachse A im Uhrzeigersinn längs des Pfeils U (Arbeitsrichtung U) dreht. Die Orientierung der Filtertrommel 14 im Raum ist durch den die Schwerkraftwirkungsrichtung angebenden Pfeil g in Fig. 1 angegeben.

Die Filtertrommel 14 weist längs ihres Außenumfangs Kammern 16 auf, welche den Außenumfang der Filtertrommel 14 in Umfangsrichtung unterteilen. Durch ein zumindest am Suspensionsaustrittsende zur Schwerkraftwirkungsrichtung paralleles Einfüllrohr 18 wird in Richtung des Pfeils 20 eine Suspension 22 unter einem Überdruck gegenüber dem herrschenden Atmosphärendruck in einen ersten Arbeitsbereich 1 des Drucktrommelfilters 12 in die Kammern 16 eingegeben.

Die Arbeitsbereiche 1 bis V sind durch Dichtungselemente 24 in Umfangsrichtung voneinander abgetrennt. Die Dichtungselemente 24 dichten Kammern 16, welche den Umfangsbereich des Filters 12 durchlaufen, in dem die Dichtungselemente 24 angeordnet sind, nach radial außen zur Umgebung hin ab. Darüber hinaus stellen die Dichtungselemente 24 auch eine Dichtung in Umfangsrichtung bereit, sodass sich Einflüsse auf die Kammern 16 in einer bestimmten Arbeitszone nicht auf Kammern 16 der unmittelbar vorhergehenden oder der unmittelbar nachfolgenden Arbeitszone auswirken.

Die Suspension 22 umfasst Feststoffe 23, welche durch Kreise angedeutet sind, sowie eine Suspensionsflüssigkeit 32, welche durch Punkte angedeutet ist.

An der Filtertrommel 14 liegt ein Filtermittel 26 an, welches einen Teil der Böden der Kammern 16 bildet. Das Filtermittel 26 kann aus einem Gewebe oder einem Fasergewirr oder dergleichen gebildet sein. Je nach der zu filternden Suspension kann das Filtermittel 26 Metall- oder/und Kunststoffoder/und Naturfasern umfassen.

Von den Kammern 16 weist jede ein Ablaufrohr 28 auf, welches mit der ihr zugeordneten Kammer 16 im Uhrzeigersinn um die Achse A umläuft. Der Übersichtlichkeit halber sind nur an fünf der Kammern 16 in Fig. 1 Ablaufrohre 28 gezeichnet.

Die bewegten Ablaufrohre 28 sind weiter stromabwärts durch eine entsprechende Kupplung mit nicht dargestellten starren Ablaufrohren gekoppelt, wobei vorzugsweise jeder Arbeitszone .ein eigenes starres Ablaufrohr zugeordnet ist.

In der Arbeitszone 1 wird durch den Überdruck auf der radial äußeren Hochdruckseite 30 die Suspensionsflüssigkeit 32 durch das Filtermittel 26 hindurch nach radial innen abgeführt. Dabei wird am stromabwärtigen Endbereich 34 der Arbeitszone 1 über ein Rohr 36 ein Gas in die Suspension 22 eingeperlt, welches aufgrund des Druckgleichgewichts in der Arbeitszone 1 den gleichen Druck aufweist wie die Suspension 22 selbst. Durch dieses eingeperlte Gas wird zusätzlich Suspensionsflüssigkeit 32 von den Feststoffen entfernt und über die Ablaufrohre 28 abgeführt. Außerdem wird durch das eingeperlte Gas am stromabwärtigen Endbereich 34 der Arbeitszone I Süspensionsflüssigkeit 32 aus den Ablaufrohren 28 zumindest im kammernahen Bereich verdrängt.

Am Ende der Arbeitszone I ist der Großteil der Suspensionsflüssigkeit 32 abgefiltert. Zurück bleiben Feststoffe mit einer gewissen Restfeuchtigkeit sowie mit Resten von in Poren und Kapillarspalten eingeschlossener und festgehaltener Suspensionsflüssigkeit.

Das unmittelbar auf die Arbeitszone I folgende Dichtungselement 24 weist nicht dargestellte Begasungsdüsen auf, welche eine Kammer 16 so lange mit Überdruck gegenüber der Filterablaufseite begasen, wie sich diese Kammer vollständig unter dem Dichtungselement 24 befindet und von diesem abgedichtet ist. Durch diese Begasung wird Suspensionsflüssigkeit 32 weiter aus den Ablaufrohren 28 entfernt.

In der nachfolgenden Arbeitszone II wird zunächst am stromaufwärtigen Endbereich 38 dieser Zone eine mit Gas versetzte Gegenspülflüssigkeit, etwa Wasser, in Richtung des Pfeils 40 nach radial außen von der Niederdruckseite 42 aus zum Filtermittel 26 hin geleitet, um die in den Kammern 16 am Filtermittel 26 abgelagerten Feststoffe vom Filtermittel 26 abzulösen.

Anschließend werden die Feststoffe aus den Kammern 16 entnommen und einer Waschvorrichtung 44 zugeführt.

Die Waschvorrichtung 44 umfasst ein Mischvolumen 46 in Form eines Mischbehälters, in welchen ein Rohr 48 geführt ist, durch das Waschflüssigkeit 50, etwa Wasser, den aus den Kammern 16 entnommenen Feststoffen zugeführt wird.

Weiterhin umfasst das Mischvolumen 46 ein Rührwerk 52, weiches die eingespritzte Waschflüssigkeit 50 mit den Feststoffen 23 vermischt. Dadurch werden die Feststoffe 23 von der Waschflüssigkeit 50 umspült, sodass Kapillarspalte und Poren aufgelöst werden und darin eventuell vorhandene Suspensionsflüssigkeit 32 weggespült werden kann.

Die in dem Mischvolumen 46 mit der Waschflüssigkeit 50 resuspendierten Feststoffe werden als Resuspension 53 durch die Pumpe 54, welche für eine weitere Verwirbelung und Durchmischung von Waschflüssigkeit 50 und Feststoffen 23 sorgt, über das Leitungssystem 56 in einer Arbeitszone III wieder in die Kammern 16 der Filtertrommel 14 zugeführt. Die Resuspension 53 steht dabei unter dem von der Pumpe 54 erzeugten Überdruck relativ zum Atmosphärendruck. In der Arbeitszone III wird aufgrund des Druckgefälles zwischen der Hochdruckseite 30 und der Niederdruckseite 42 die Waschflüssigkeit 50 nach radial innen durch das Filtermittel 26 hindurch in die Ablaufrohre 28 gedrückt und abgeführt. Dabei führen sie die von den Feststoffen 23 abgelösten Suspensionsflüssigkeitsreste mit. Am Ende der Arbeitszone 111, im Uhrzeigersinn betrachtet, liegen gesäuberte, aber durch Waschflüssigkeit 50 noch restfeuchte Feststoffe 23 in den Kammern 16.

In einer Arbeitszone IV, welche sich an die Arbeitszone III bei Bewegung der Filtertrommel 14 im Uhrzeigersinn anschließt, werden die Feststoffe 23 in den Kammern 16 über an Rohrstutzen 58 angeschlossene nicht weiter dargestellte Leitungen mit heißem Wasserdampf beschickt, wodurch die Feststoffe 23 noch weiter gesäubert und überdies getrocknet werden. Der Wasserdampf wird über die Ablaufrohre 28 abgeführt und bewirkt so auch eine teilweise Reinigung der Ablaufrohre 28.

Schließlich wird über eine Auswerfereinrichtung 60 in einer in Arbeitsrichtung U unmittelbar an die Arbeitszone IV anschließende Arbeitszone V das getrocknete Feststoffmaterial 23 aus dem Drucktrommelfilter 12 entnommen und einer weiteren Bearbeitung zugeführt.

In Arbeitsrichtung U auf die Auswerfereinrichtung 60 folgend wird das Filtermittel 26 mit einer Reinigungsflüssigkeit 62 beschickt und vor einem erneuten Auftrag von zu filternder Suspension 22 gereinigt. Die Reinigungsflüssigkeit 62 wird ebenfalls durch die Ablaufrohre 28 abgeführt und bewirkt so auch eine Reinigung der Ablaufrohre 28.

Es ist anzumerken, dass die Druckfiltertrommel 14 in Fig. 1 getaktet oder kontinuierlich in Arbeitsrichtung U bewegt werden kann.

## Patentansprüche

1. Verfahren zum Abtrennen von Feststoffen (23) aus einer die Feststoffe (23) und Suspensionsflüssigkeit (32) enthaltenden Suspension (22) in einer kontinuierlich oder quasikontinuierlich arbeitenden, als Trommelfilter ausgebildeten, Filtervorrichtung (10), deren Filtervolumen in Kammern aufgeteilt ist, die die zu filternde Suspension aufnehmen, unter Verwendung eines Filtermittels (26), auf dessen einer Seite, der Hochdruckseite (30), ein höherer Druck herrscht als auf dessen anderer Seite, der Niederdruckseite (42), und welches nacheinander eine Mehrzahl von Arbeitszonen (I-V) der Filtervorrichtung (10) in einer Arbeitsrichtung (U) durchläuft, wobei die Suspension (22) dem Filtermittel (26) in einer ersten Arbeitszone (1) auf dessen Hochdruckseite (30) zugeführt und filtriert wird, wobei die Suspensionsflüssigkeit (22) auf Grund der Druckdifferenz zwischen der Hochdruckseite (30) und der Niederdruckseite (42) das Filtermittel (26) durchströmt, während sich zumindest ein Teil der Feststoffe (23) auf dem Filtermittel (26) ablagert,
**dadurch gekennzeichnet, dass** die auf dem Filtermittel (26) abgelagerten Feststoffe (23) in Kammern einer in Arbeitsrichtung (U) nach der ersten Arbeitszone (I) angeordneten zweiten Arbeitszone (11) durch. Einspritzen von Waschflüssigkeit (50) in den Filterkuchen resuspendiert werden, und dass die so gebildete neue Suspension . (Resuspension) (53) über ein Leitungssystem (56) in Kammern einer in Arbeitsrichtung (U) nach der zweiten Arbeitszone (II) angeordneten dritten Arbeitszone (III) der Filtervorrichtung (10) wieder filtriert wird.

2. Verfahren nach Anspruch 1,
**dadurch gekennzeichnet, dass** die Feststoffe (23) in einer außerhalb der Filtervorrichtung (10) angeordneten Waschvorrichtung (44) resuspendiert werden.

3. Verfahren nach Anspruch 1 oder 2,
**dadurch gekennzeichnet, dass** die Waschvorrichtung (44) eine Förderstrecke (56) mit wenigstens einem statischen Mischelement (56) oder/und mit wenigstens einem dynamischen Mischelement (52) oder/und mit wenigstens einer Pumpe (54) oder/und mit wenigstens einem Mischvolumen (46) umfasst.

4. Verfahren einem der vorhergehenden Ansprüche,
**dadurch gekennzeichnet, dass** die Feststoffe (23; 123) in der Filtervorrichtung (10; 110) resuspendiert werden.

5. Verfahren nach einem der vorhergehenden Ansprüche,
**dadurch gekennzeichnet, dass** die Feststoffe (23; 123) durch eine hohe Strömungsgeschwindigkeit der zugeführten Waschflüssigkeit (50; 150) resuspendiert werden.

6. Verfahren nach einem der vorhergehenden Ansprüche,
**dadurch gekennzeichnet, dass** die Feststoffe (23; 123) durch Gegenspülen oder/und Gegenblasen vom Filtermittel (26; 126) abgelöst werden.

7. Verfahren nach Anspruch 6,
**dadurch gekennzeichnet, dass** eine mit Gas versetzte Gegenspülflüssigkeit verwendet wird.

8. Verfahren nach einem der vorhergehenden Ansprüche,
**dadurch gekennzeichnet, dass** die auf dem Filtermittel (26) abgelagerten Feststoffe nach dem Abfiltrieren mit gasförmigem Behandlungsfluid durchgeblasen werden, beispielsweise bis zumindest ein Teil der Suspensionsflüssigkeit (22), vorzugsweise die gesamte Suspensionsflüssigkeit (22), aus wenigstens einem von der ersten Arbeitszone (I) her noch mit Suspensionsflüssigkeit (22) gefüllten Ablaufrohr (28) verdrängt worden ist.

9. Verfahren nach einem der vorhergehenden Ansprüche,
**dadurch gekennzeichnet, dass** dann, wenn das in Arbeitsrichtung (U) stromabwärtige Ende (34) der ersten Arbeitszone (1) in einem entgegen der Schwerkraft (g) ansteigenden Abschnitt der Filtervorrichtung (10) angeordnet ist, den auf dem Filtermittel (26) abgelagerten Feststoffen (23) diesem Ende (34) benachbart ein gasförmiges Behandlungsfluid zugeführt wird.

10. Verfahren nach einem der vorhergehenden Ansprüche,
**dadurch gekennzeichnet, dass** die Feststoffe (123) wenigstens ein weiteres Mal einer Resuspendier-Waschung unterzogen werden, -nämlich vom Filtermittel (126) entfernt, in einer Waschflüssigkeit (150₃) resuspendiert und schließlich dem Filtermittel (126) wieder zugeführt und abfiltriert werden, oder/und wenigstens einmal einer Durchström-Waschung unterzogen werden, nämlich mittels Waschflüssigkeit (150) gewaschen werden, welche von der Hochdruckseite (130) des Filtermittels (126) zu dessen Niederdruckseite (142) strömt.

## Claims

1. Method for extracting solids (23) from a suspension (22) containing the solids (23) and suspension liquid (32) in a continuously or virtually continuously operating filter device (10), configured as a drum filter, whose filter volume is divided into chambers, which take up the suspension to be filtered, using a filtering material (26), on the one side of which, the high-pressure side (30), a higher pressure prevails than on its other side, the low-pressure side (42), and which passes successively through a plurality of working zones (I-V) of the filter device (10) in a working direction (U), the suspension (22) being supplied to the filtering material (26) on its high-pressure side (30) in a first working zone (I) and being filtered, the suspension liquid (22) flowing through the filtering material (26) on account of the difference in pressure between the high-pressure side (30) and the low-pressure side (42) while at least some of the solids (23) are deposited on the filtering material (26),
**characterized in that** the solids (23) which are deposited on the filtering material (26) are resuspended in chambers of a second working zone (II), which is arranged downstream of the first working zone (I) in the working direction (U) by injecting washing liquid (50) into the filter cake, and **in that** the new suspension (resuspension) (53) thus formed is filtered again via a guidance system (56) into chambers of a third working zone (III) of the filter device (10), which zone is arranged downstream of the second working zone (II) in the working direction (U).

2. Method according to Claim 1, **characterized in that** the solids (23) are resuspended in a washing device (44) arranged outside the filter device (10).

3. Method according to Claim 1 or 2, **characterized in that** the washing device (44) comprises a conveying section (56) with at least one static mixing element (56) and/or with least one dynamic mixing element (52) and/or with at least one pump (54) and/or with at least one mixing volume (46).

4. Method of one of the preceding claims, **characterized in that** the solids (23; 123) are resuspended in the filter device (10; 110).

5. Method according to one of the preceding claims, **characterized in that** the solids (23; 123) are resuspended by a, preferably flat, stirrer (52; 152₂, 152₃) and/or by a high flow velocity of the supplied washing liquid (50; 150).

6. Method according to one of the preceding claims, **characterized in that** the solids (23; 123) are detached from the filtering material (26; 126) by counter-flushing and/or counter-blowing.

7. Method according to Claim 6, **characterized in that** a counter-flushing liquid mixed with gas is used.

8. Method according to one of the preceding claims, **characterized in that** the solids deposited on the filtering material (26) are, after being filtered out, blown through with gaseous treatment fluid, for example until at least some of the suspension liquid (22), preferably all of the suspension liquid (22), has been displaced out of at least one discharge pipe (28) still filled with suspension liquid (22) from the first working zone (I).

9. Method according to one of the preceding claims, **characterized in that** whenever that end (34) of the first working zone (I) which is downstream in the working direction (U) is arranged in a section of the filter device (10) that rises counter to gravity (g), a gaseous treatment fluid is supplied, adjacent to this end (34), to the solids (23) deposited on the filtering material (26).

10. Method according to one of the preceding claims, **characterized in that** the solids (123) are subjected at least one further time to a resuspension washing, namely are removed from the filtering material (126), resuspended in a washing liquid (150₃) and finally supplied again to the filtering material (126) and filtered out, and/or are subjected at least once to a throughflow washing, namely are washed by means of washing liquid (150) which flows from the high-pressure side (130) of the filtering material (126) to its low-pressure side (142).

## Revendications

1. Procédé pour la séparation de matières solides (23) d'une suspension (22) contenant lesdites matières solides (23) et du liquide de suspension (32) dans un dispositif de filtration (10) fonctionnant de manière continue ou quasi-continue, réalisé comme filtre à tambour, dont le volume de filtre est divisé en compartiments recevant la suspension à filtrer, recourant à un agent filtrant (26) sur le premier côté duquel, le côté haute pression (30), est appliquée une pression supérieure à celle sur son autre côté, le côté basse pression (42), et qui passe successivement par plusieurs zones de travail (I - V) du dispositif de filtration (10) dans une direction de travail (U),
où la suspension (22) est appliquée sur l'agent filtrant (26) et filtrée dans une première zone de travail (1) sur le côté haute pression (30) de celui-ci, le liquide de suspension (32) traversant l'agent filtrant (26) en raison de la différence de pression entre le côté haute pression (30) et le côté basse pression (42), tandis qu'au moins une partie des matières solides (23) se dépose sur l'agent filtrant (26),
**caractérisé en ce que** les matières solides (23) déposées sur l'agent filtrant (26) sont resuspendues dans des compartiments d'une deuxième zone de travail (11) suivant la première zone de travail (I) dans la direction de travail (U), par injection de liquide de lavage (50) dans les gâteaux de filtration, et **en ce que** la nouvelle suspension ainsi formée (resuspension) (53) est à nouveau filtrée via un système de conduite (56) dans des compartiments d'une troisième zone de travail (III) du dispositif de filtration (10) suivant la deuxième zone de travail (II) dans la direction de travail (U).

2. Procédé selon la revendication 1,
**caractérisé en ce que** les matières solides (23) sont resuspendues dans un dispositif de lavage (44) situé à l'extérieur du dispositif de filtration (10).

3. Procédé selon la revendication 1 ou 2,
**caractérisé en ce que** le dispositif de lavage (44) comprend un chemin de transport (56) avec au moins un élément mélangeur statique (56) et/ou avec au moins un élément mélangeur dynamique (52) et/ou avec au moins une pompe (54) et/ou avec au moins un volume mélangeur (46).

4. Procédé selon l'une des revendications précédentes,
**caractérisé en ce que** les matières solides (23 ; 123) sont resuspendues dans le dispositif de filtration (10 ; 110).

5. Procédé selon l'une des revendications précédentes,
**caractérisé en ce que** les matières solides (23 ; 123) sont resuspendues avec une vitesse d'écoulement élevée du liquide de lavage (50 ; 150) appliqué.

6. Procédé selon l'une des revendications précédentes,
**caractérisé en ce que** les matières solides (23 ; 123) sont détachées de l'agent filtrant (26 ; 126) par contre-rinçage et/ou par contre-soufflage.

7. Procédé selon la revendication 6,
**caractérisé en ce qu'**un liquide de contre-rinçage est utilisé, auquel du gaz a été ajouté.

8. Procédé selon l'une des revendications précédentes,
**caractérisé en ce que** les matières solides déposées sur l'agent filtrant (26) sont soufflées avec un fluide de traitement gazeux après la filtration, par exemple jusqu'à ce qu'au moins une partie du liquide de suspension (22), de préférence la totalité du liquide de suspension (22), ait été expulsée d'au moins une conduite de décharge (28) encore remplie de liquide de suspension (22) depuis la première zone de travail (I).

9. Procédé selon l'une des revendications précédentes,
**caractérisé en ce que**, si l'extrémité (34) de la première zone (I) côté aval dans la direction de travail (U) est disposée dans un segment ascendant contre la force de gravité (g) du dispositif de filtration (10), un fluide de traitement gazeux est appliqué sur les matières solides (23) déposées sur l'agent filtrant (26) à proximité de cette extrémité (34).

10. Procédé selon l'une des revendications précédentes,
**caractérisé en ce que** les matières solides (123) sont soumises au moins une autre fois à un lavage de resuspension, en l'occurrence à distance de l'agent filtrant (126), resuspendues dans un liquide de lavage (150₃) et finalement reconduites vers l'agent filtrant (126) et filtrées, et/ou au moins une fois soumises à un lavage par effluvation, en l'occurrence lavées au moyen de liquide de lavage (150) s'écoulant du côté haute pression (130) de l'agent filtrant (126) vers le côté basse pression (142) de celui-ci.
